# EUROPÄISCHE PATENTSCHRIFT

(11) **EP 4 011 193 B1**
(45) Veröffentlichungstag und Bekanntmachung des Hinweises auf die Patenterteilung: **25.06.2025**
(21) Anmeldenummer: 21212737.7
(22) Anmeldetag: 07.12.2021
(51) Int. Cl.: A01G 3/06

(54) **ANORDNUNG AUS EINEM ELEKTROWERKZEUG UND EINEM HANDHABUNGSGERÄT**
ARRANGEMENT OF A POWER TOOL AND A HANDLING DEVICE
AGENCEMENT COMPOSÉ D'UN OUTIL ÉLECTRIQUE ET D'UN APPAREIL DE MANUTENTION

(30) Priorität: 08.12.2020 DE 102020132610
(43) Veröffentlichungstag der Anmeldung: 15.06.2022
(73) Patentinhaber: Metabowerke GmbH, 72622 Nürtingen (DE)
(72) Erfinder: Seyerle, Jörg, 73257 Köngen (DE)
(74) Vertreter: Schmid, Wolfgang

(56) Entgegenhaltungen:
- DE-A1- 2 438 360
- DE-U- 7 501 671
- US-A- 3 996 729
- US-A- 4 018 037
- US-A- 4 603 478

## Beschreibung

Die Erfindung betrifft eine Anordnung aus einem eine Arbeitseinrichtung aufweisenden Elektrowerkzeug und einem zur Abstützung und Bewegung des Elektrowerkzeugs dienenden Handhabungsgerät an einer Ebene.

Aus der EP 1 479 285 B1 ist eine elektromotorisch betriebene Grasschere bekannt, die ein Gehäuse mit einer Aufnahmeöffnung für einen einsteckbaren Stiel aufweist.

Die CN 201146705 Y beschreibt eine ähnliche Grasschere, die mit einem Schiebewagen und einer Verlängerungsscheibe benutzt werden kann. Die Verlängerungsstange wird in eine Ausnehmung der Grasschere eingesteckt.

Aus der DE 10 2012 214 715 A1 ist eine ähnliche Grasschere bekannt, bei der eine Führungsstange gelenkig mit derselben verbunden ist. Dabei werden Verbindungsbolzen in entsprechende Ausnehmungen des Gehäuses der Grasschere eingeführt.

Die DE 24 38 360 A1 beschreibt eine Motor-Grasschere, die mit einem Rollstock verbindbar und lösbar ist, der aus einem abgewinkelten Stab und in der Nähe der Abwinkelstelle angebrachte Rollen besteht.

Aus der DE 76 25 946 U ist eine Befestigungsvorrichtung zur lösbaren Anbringung eines oberen Griffes an einer tragbaren, batteriebetriebenen Werkzeugmaschine, insbesondere einer Grasschere, bekannt.

Die US 3 759 020 A offenbart eine motorbetriebene Hand-Grasschere zur Rasenkürzung.

Aus der US 3 996 729 A geht eine Anhängeeinrichtung und deren trennbare Verbindung zu einer üblicherweise tragbaren, elektrisch betriebenen Grasschere hervor.

Die US 3 759 020 A offenbart eine motorbetriebene Hand-Grasschere zur Rasenkürzung.

Aus der US 3 996 729 A geht eine Anhängeeinrichtung und deren trennbare Verbindung zu einer üblicherweise tragbaren, elektrisch betriebenen Grasschere hervor.

Sämtliche der bekannten Lösungen sind jedoch recht aufwändig in ihrer Handhabung. Des Weiteren ist die Führung des Elektrowerkzeugs durch das Handhabungsgerät vergleichsweise schwierig.

Es ist daher Aufgabe der vorliegenden Erfindung, eine Anordnung aus einem eine Arbeitseinrichtung aufweisenden Elektrowerkzeug und einem zur Abstützung und Bewegung des Elektrowerkzeugs dienenden Handhabungsgerät an einer Ebene zu schaffen, die eine einfache Handhabung beim Verbinden des Handhabungsgeräts mit dem Elektrowerkzeug sowie eine präzise Steuerung des Elektrowerkzeugs in seinem an dem Handhabungsgerät montierten Zustand ermöglicht.

Erfindungsgemäß wird diese Aufgabe durch die in Anspruch 1 genannten Merkmale gelöst.

Die Führungsnut und der zum Eingriff in die Führungsnut geeignete Vorsprung der erfindungsgemäßen Anordnung ermöglichen ein einfaches Einschieben des Elektrowerkzeugs in eine entsprechende Aufnahme des Handhabungsgeräts bzw. umgekehrt des Handhabungsgeräts auf das Elektrowerkzeug, so dass selbst ein ungeübter Nutzer in der Lage ist, das Elektrowerkzeug auf einfache Weise mit dem Handhabungsgerät zu verbinden. Das bei der erfindungsgemäßen Anordnung vorgesehene Verriegelungselement gewährleistet dabei eine sichere Halterung des Elektrowerkzeugs an dem Handhabungsgerät.

Neben der einfachen Verbindung des Elektrowerkzeugs mit dem Handhabungsgerät ergibt sich durch die erfindungsgemäße Anordnung auch eine einfache Steuerung des Elektrowerkzeugs durch das Handhabungsgerät, da diese beiden Elemente fest und sicher miteinander verbunden sind, so dass jede in das Handhabungsgerät eingeleitete Bewegung in eine entsprechende Bewegung des Elektrowerkzeugs umgesetzt wird.

Dadurch, dass die Längsachse der Führungsstange in dem erfindungsgemäßen Winkelbereich von 60° bis 90° zu der Ebene, an der das Elektrowerkzeug abgestützt ist, anordenbar ist und zumindest in einem Winkel des Winkelbereichs die Radachse des Elektrowerkzeuges im Wesentlichen senkrecht schneidet und somit steil zu der Ebene und senkrecht zu der Radachse verläuft, wird eine von einem Bediener ausgehende Bewegung der Führungsstange vorteilhaft präzise in eine Bewegung der Arbeitseinrichtung umgesetzt. Dies ist dadurch bedingt, dass bei einer Auslenkung der Führungsstange in Richtung der Arbeitseinrichtung die Radachse als Drehachse fungiert und ein Arbeitsabstand der Arbeitseinrichtung von der Ebene durch den geringen Abstand zwischen der Arbeitseinrichtung und der Radachse mit einer vorteilhaft kleinen Untersetzung eingestellt werden kann. Bei einer seitlichen Auslenkung der Führungsstange fungiert das in der jeweiligen Auslenkungsrichtung angeordnete Rad als Drehpunkt, wobei durch den steilen Verlauf der Längsachse der Führungsstange zu der Ebene durch den Bediener die Anordnung einfach gegen die Schwerkraft seitlich verkippt werden kann.

Ein besonderer Vorteil der erfindungsgemäßen Lösung besteht außerdem darin, dass das Handhabungsgerät unabhängig vom Ort, an dem sich ein dasselbe mit elektrischem Strom versorgender Akku befindet, an dem Elektrowerkzeug angebracht werden kann. Dadurch ist es nicht erforderlich, den Akku zu demontieren, um das Elektrowerkzeug an dem Handhabungsgerät anzubringen.

In einer vorteilhaften Weiterbildung der Erfindung kann eine Verschwenkeinrichtung vorgesehen sein, mittels welcher die Längsachse der Führungsstange in einem Verschwenkbereich zu der Ebene, an der das Elektrowerkzeug abgestützt ist, verschwenkbar ist. Der Winkel, um den die Verschwenkeinrichtung innerhalb des Verschwenkbereichs verschwenkt werden kann, kann dabei Winkel annehmen, die auch außerhalb des erfindungsgemäßen Winkelbereichs liegen. Es kann vorgesehen sein, dass der Verschwenkbereich den Winkelbereich vollständig umfasst und an einem oder beiden Endbereichen über diesen hinausgeht oder mit diesem identisch ist oder lediglich ein Teilbereich des Winkelbereichs ist. In jedem Fall ermöglicht die Verschwenkeinrichtung eine Anordnung der Längsachse der Führungsstange innerhalb des erfindungsgemäßen Winkelbereichs. Dadurch, dass also der Verschwenkbereich mit dem erfindungsgemäßen Winkelbereich wenigstens teilweise überlappt, wird sichergestellt, dass dem Bediener eine Einstellung des Winkels in dem erfindungsgemäßen Winkelbereich ermöglicht wird, um von den sich in diesem Bereich einstellenden vorteilhaften mechanischen Wirkungen profitieren zu können.

In einer sehr vorteilhaften Weiterbildung der Erfindung kann vorgesehen sein, dass die wenigstens eine Führungsnut an einem Gehäuseteil des Elektrowerkzeugs vorgesehen ist, und dass der wenigstens eine Vorsprung an dem Handhabungsgerät vorgesehen ist. Dadurch wird die Realisierung der erfindungsgemäßen Lösung mit sehr geringen Eingriffen an dem Elektrowerkzeug ermöglicht. Grundsätzlich wäre es jedoch auch möglich, die wenigstens eine Führungsnut an dem Handhabungsgerät und den wenigstens einen Vorsprung an dem Elektrowerkzeug vorzusehen.

Eine besonders sichere Führung und zugleich eine besonders zuverlässige Halterung des Elektrowerkzeugs an dem Handhabungsgerät ergibt sich, wenn wenigstens zwei einander gegenüberliegende Führungsnuten und jeweilige in die Führungsnuten eingreifende Vorsprünge vorgesehen sind.

Um dabei sowohl die Bedienung für den Nutzer als auch die Fertigung sowohl der Führungsnuten als auch der Vorsprünge zu vereinfachen, kann des Weiteren vorgesehen sein, dass die Führungsnuten und die Vorsprünge einen wenigstens annähernd rechteckigen Querschnitt aufweisen.

Eine alternative Ausführungsform kann darin bestehen, dass genau eine Führungsnut und genau ein Vorsprung vorgesehen sind, wobei die Führungsnut zwei Hinterschneidungen aufweist und wobei der Vorsprung jeweilige in die Hinterschneidungen ragende Eingreifelemente aufweist. Dadurch kann gegebenenfalls eine einfachere Realisierung der Vorrichtung im Bereich des Elektrowerkzeugs ermöglicht werden, wobei durch die Hinterschneidungen der Führungsnut und die Eingreifelemente des Vorsprungs dennoch eine sichere Verbindung zwischen dem Elektrowerkzeug und dem Handhabungsgerät gewährleistet ist.

Um eine Bedienung des Elektrowerkzeugs über das Handhabungsgerät zu ermöglichen, kann des Weiteren vorgesehen sein, dass das Elektrowerkzeug und das Handhabungsgerät jeweilige Kontaktelemente aufweisen.

Wenn dabei die Kontaktelemente des Handhabungsgeräts und/oder des Elektrowerkzeugs als Federelemente ausgebildet sind, so ergibt sich beim Verbinden des Elektrowerkzeugs mit dem Handhabungsgerät eine automatische Kontaktierung derselben, was das Verbinden des Elektrowerkzeugs mit dem Handhabungsgerät erheblich erleichtert.

Wenn in einer weiteren vorteilhaften Ausgestaltung der Erfindung die Vorrichtung eine Ausnehmung, welche zum Eingreifen durch das Verriegelungselement vorgesehen ist, aufweist, so wird eine noch zuverlässigere Halterung des Elektrowerkzeugs an dem Handhabungsgerät gewährleistet.

Die Anbringung des Elektrowerkzeugs an dem Handhabungsgerät kann zudem dadurch vereinfacht werden, dass ein Federelement, welches das Verriegelungselement in einer das Elektrowerkzeug an dem Handhabungsgerät verriegelnden Richtung vorspannt, vorgesehen ist. Auf diese Weise ist es lediglich erforderlich, das Elektrowerkzeug gegenüber dem Handhabungsgerät so lange zu verschieben, bis das Federelement dafür sorgt, dass das Verriegelungselement verriegelt wird.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass hierfür erfinderisch tätig werden zu müssen.

Es zeigen schematisch:
- Fig. 1: eine Seitenansicht eines Elektrowerkzeugs, das Teil der erfindungsgemäßen Anordnung ist;
- Fig. 2: eine Ansicht des Elektrowerkzeugs gemäß dem Pfeil II aus Fig. 1;
- Fig. 3: eine Vorderansicht eines Teils eines Handhabungsgeräts, das Teil der erfindungsgemäßen Anordnung ist;
- Fig. 4: eine Ansicht gemäß dem Pfeil IV aus Fig. 3;
- Fig. 5: eine Ansicht gemäß dem Pfeil V aus Fig. 3;
- Fig. 6: eine Ansicht eines Teils einer erfindungsgemäßen Anordnung mit dem durch das Handhabungsgerät gehaltenen Elektrowerkzeug;
- Fig. 7: eine vergrößerte Darstellung eines Schnitts durch eine Vorrichtung zur Halterung des Elektrowerkzeugs an dem Handhabungsgerät; und
- Fig. 8: eine isometrische Darstellung der erfindungsgemäßen Anordnung.

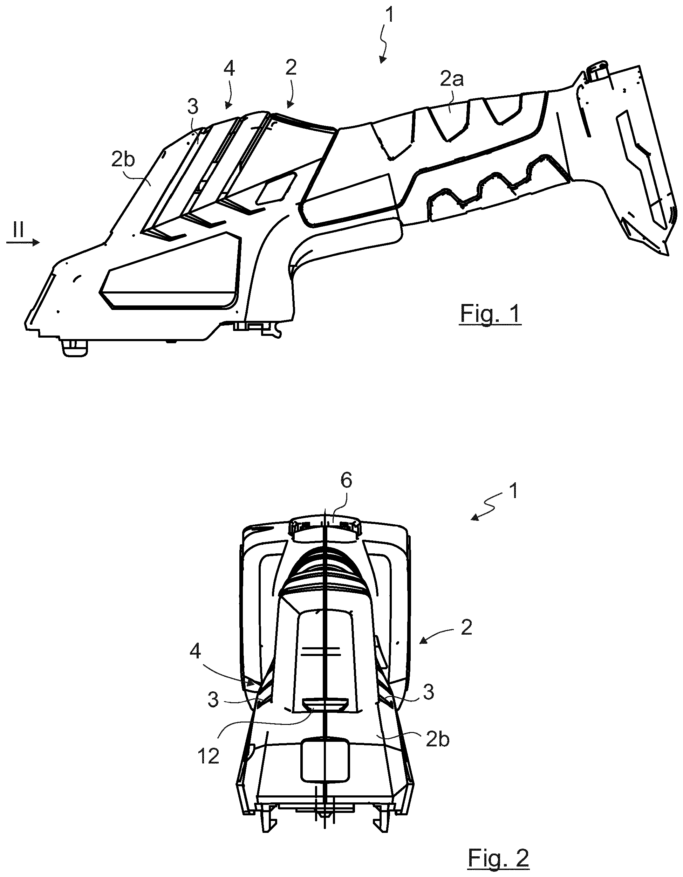

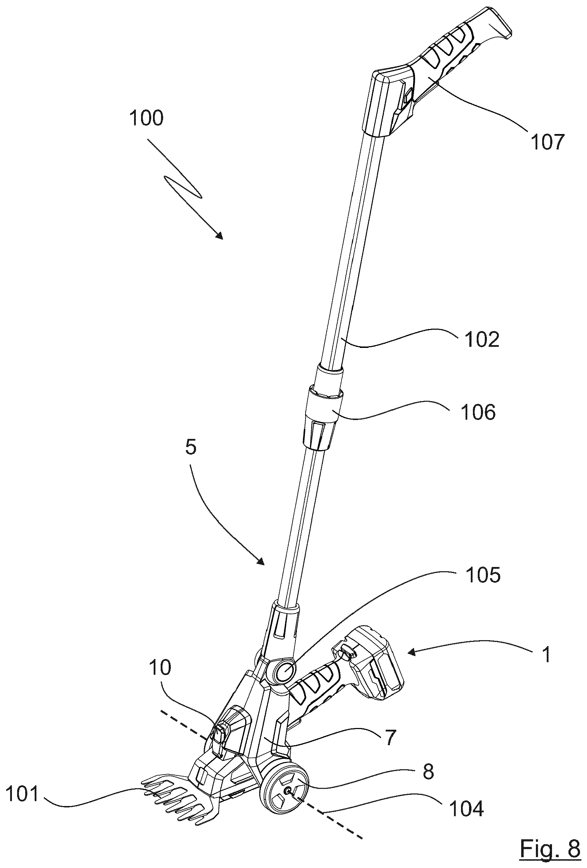

Fig. 1 zeigt ein Elektrowerkzeug 1, im vorliegenden Fall eine Grasschere. Das Elektrowerkzeug 1 weist ein Gehäuse 2 auf, das in einen Griffgehäusebereich 2a und in einen Motorgehäusebereich 2b unterteilt werden kann. Während an dem Griffgehäusebereich 2a ein nicht dargestellter Akku angebracht werden kann, kann an dem Motorgehäusebereich 2b eine in Fig. 8 gezeigte Arbeitseinrichtung 101, welche beispielsweise wie in Fig. 8 als Schneidmesser ausgebildet sein kann, angebracht werden.

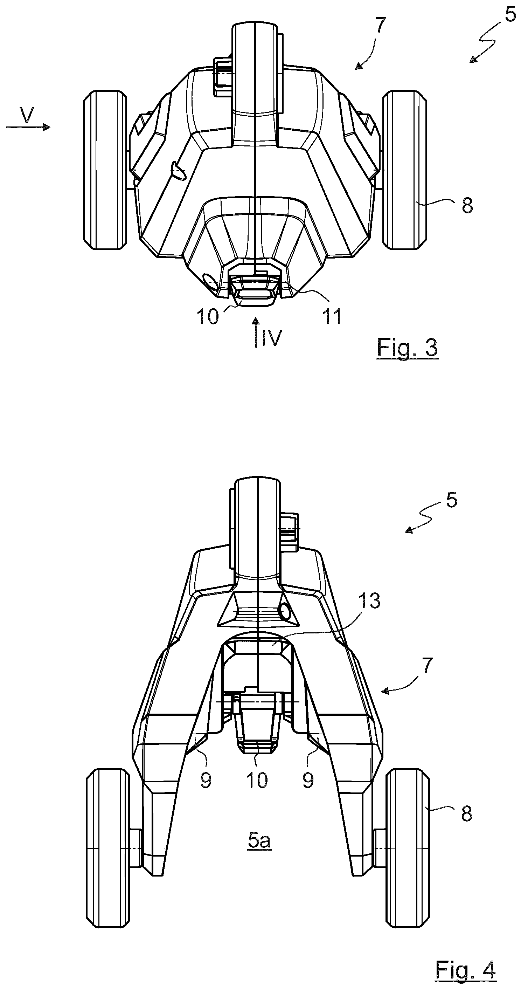

Insbesondere in Fig. 1 ist an dem Motorgehäusebereich 2b des Gehäuses 2 eine Führungsnut 3 zu erkennen, die Teil einer nachfolgend näher beschriebenen Vorrichtung 4 zur Halterung des Elektrowerkzeugs 1 an einem in den Figuren 3, 4 und 5 dargestellten Handhabungsgerät 5 ist. Aus Fig. 2 geht hervor, dass auf beiden Seiten des Motorgehäusebereichs 2b des Gehäuses 2 jeweilige Führungsnuten 3 vorgesehen sind, die einander gegenüberliegen. Des Weiteren ist in Fig. 2 ein sich an der Oberseite des Motorgehäusebereichs 2b des Gehäuses 2 befindendes Kontaktelement 6 des Elektrowerkzeugs 1 zu erkennen.

Das in den Figuren 3, 4 und 5 dargestellte Handhabungsgerät 5 ist als sogenannter Schiebewagen ausgebildet und weist zwei beiderseits eines Gehäuses 7 angeordnete Räder 8 auf. Durch die Räder 8 ist es möglich, das mittels der Vorrichtung 4 an dem Handhabungsgerät 5 gehaltene Elektrowerkzeug 1 an einer Ebene abzustützen und gegenüber derselben zu bewegen. In bestimmten Fällen könnte auch auf die Räder 8 verzichtet werden, wenn die Ebene bzw. der Untergrund, auf dem das Elektrowerkzeug 1 bewegt werden soll, dies ermöglicht.

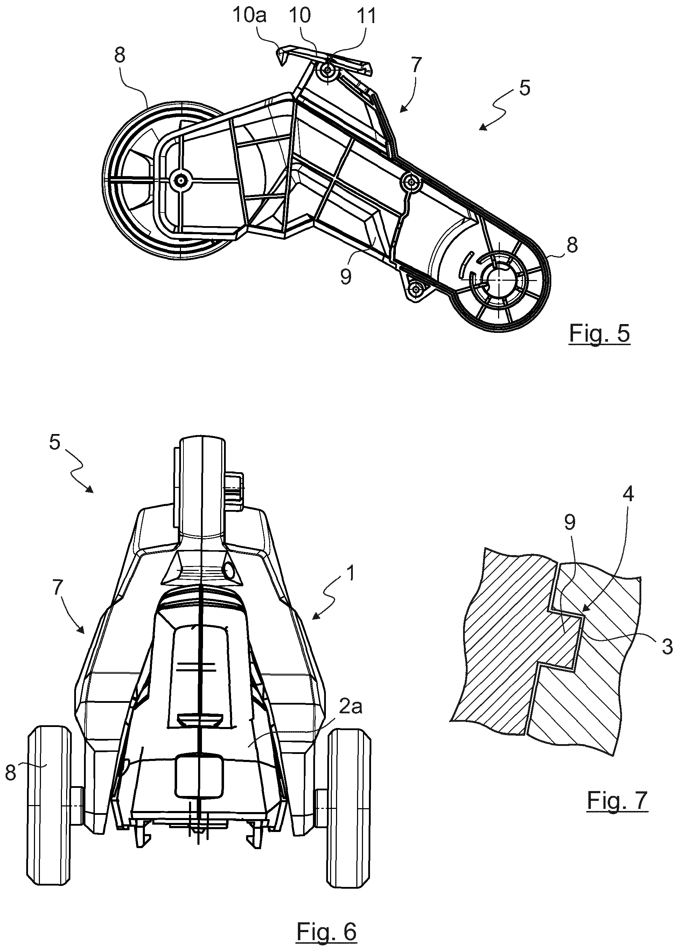

Das Gehäuse 7 des Handhabungsgeräts 5 weist in seiner allgemeinsten Ausführungsform wenigstens einen zum Eingriff in die Führungsnut 3 des Gehäuses 2 des Elektrowerkzeugs 1 geeigneten Vorsprung 9 auf, der in Fig. 5 sowie, sehr schematisch, in Fig. 7 dargestellt ist. Vorzugsweise sind, ähnlich wie im Fall der Führungsnuten, an beiden Seiten des Gehäuses 7 jeweilige Vorsprünge 9 vorgesehen, die so angeordnet sind, dass sie beim Einschieben des Elektrowerkzeugs 1 in eine in dem Gehäuse 7 gebildete Aufnahme 5a des Handhabungsgeräts 5 in die Führungsnuten 3 eingreifen. In der vergrößerten Darstellung von Fig. 7 ist das Eingreifen der Vorsprünge 9 des Handhabungsgeräts 5 in die Führungsnuten 3 des Elektrowerkzeugs 1 erkennbar.

Gegebenenfalls kann das Handhabungsgerät 5 und insbesondere der wenigstens eine Vorsprung 9 an demselben an die jeweiligen Erfordernisse des Elektrowerkzeugs 1 bzw. der wenigstens einen Führungsnut 3 desselben, angepasst werden. In einer nicht dargestellten Ausführungsform kann genau eine Führungsnut 3 und genau ein Vorsprung 9 vorgesehen sein. Dabei kann die Führungsnut 3 zwei Hinterschneidungen und der Vorsprung 9 jeweilige in die Hinterschneidungen ragende Eingreifelemente aufweisen.

Des Weiteren weist das Handhabungsgerät 5 ein Verriegelungselement 10 auf, das zur Verriegelung des Elektrowerkzeugs 1 an dem Handhabungsgerät 5 dient. Das Verriegelungselement 10 ist im vorliegenden Fall um eine Drehachse 11 an dem Gehäuse 7 des Handhabungsgeräts 5 drehbar gelagert und weist an einem Ende einen in Fig. 5 dargestellten Haken 10a auf, der dafür vorgesehen ist, in eine entsprechende Ausnehmung 12 in dem Elektrowerkzeug 1 einzugreifen. Die Ausnehmung 12 in dem Gehäuse 2, im vorliegenden Fall in dem Motorgehäusebereich 2b, des Elektrowerkzeugs 1 ist in Fig. 2 zu erkennen. Die Ausnehmung 12 für den Haken 10a des Verriegelungselements 10 kann beispielsweise als einfache Hinterschneidung ausgebildet sein.

Das Verriegelungselement 10 weist ein nicht dargestelltes Federelement auf, welches das Verriegelungselement 10 in einer Richtung vorspannt, die das Elektrowerkzeug 1 an dem Handhabungsgerät 5 verriegelt. Beispielsweise kann das Federelement als Schenkelfeder ausgebildet sein, die um die Drehachse 11 des Verriegelungselement 10 angeordnet ist und die das Verriegelungselement 10 so beaufschlagt, dass der Haken 10a desselben in Richtung des Elektrowerkzeugs 1 gedrückt wird. Dadurch greift der Haken 10a des Verriegelungselements 10 beim Einschieben des Elektrowerkzeugs 1 in das Handhabungsgerät 5 selbsttätig in die Ausnehmung 12 des Elektrowerkzeugs 1 ein.

Das Handhabungsgerät 5 weist des Weiteren ein zur Kontaktierung des Kontaktelements 6 des Elektrowerkzeugs 1 vorgesehenes Kontaktelement 13 auf, dass sich in einem Bereich befindet, in dem es beim Einführen des Elektrowerkzeugs 1 in die Aufnahme 5a des Handhabungsgeräts 5 mit dem Kontaktelement 6 des Elektrowerkzeugs 1 in Kontakt kommt. Vorzugsweise ist eines der Kontaktelemente 6 bzw. 13 als Federelement ausgebildet. Im vorliegenden Fall handelt es sich dabei um das Kontaktelement 13 des Handhabungsgeräts 5. Alternativ zu der Verwendung eines Federelements für eines der Kontaktelemente 6 bzw. 13 ist es grundsätzlich auch möglich, Stecker oder ähnliches zu verwenden.

Fig. 6 zeigt das Elektrowerkzeug 1 in seinem in der Aufnahme 5a des Handhabungsgeräts 5 montierten Zustand. Das Handhabungsgerät 5 ist im vorliegenden Fall im Bereich des Schwerpunkts und in der Nähe der in dem Ausführungsbeispiel nach Fig. 8 als Schneidmesser ausgebildeten Arbeitseinrichtung des Elektrowerkzeugs 1 angeordnet bzw. an demselben arretiert. Durch die Anordnung des Befestigungspunkts des Elektrowerkzeugs 1 an dem Handhabungsgerät 5 in unmittelbarer Nähe zu dem Schneidmesser ist eine sehr einfache Steuerung des Elektrowerkzeugs 1 durch das Handhabungsgerät 5 möglich. Dieser Befestigungs- bzw. Drehpunkt befindet sich auch in der Nähe der Achsen der Räder 8, d. h. deren Befestigungspunkt an dem Gehäuse 7.

Statt als Grasschere könnte das Elektrowerkzeug 1 beispielsweise auch als Schleifwerkzeug, zum Beispiel als Schwing- oder Exzenterschleifer, als Sägewerkzeug, zum Beispiel als Säbel- oder Stichsäge, oder als ein anderes Elektrowerkzeug ausgebildet sein, das in dem Handhabungsgerät 5 aufgenommen werden kann, sodass der Benutzer in Bereiche gelangen kann, die er ohne das Handhabungsgerät 5 nicht erreichen könnte. Die Arbeitseinrichtung 101 kann in diesen Fällen entsprechend ausgebildet sein.

Fig. 8 zeigt eine isometrische Darstellung einer Anordnung 100 aus dem die Arbeitseinrichtung 10 aufweisenden Elektrowerkzeug 1 und dem zur Abstützung und Bewegung des Elektrowerkzeugs 1 dienenden Handhabungsgerät 5 an einer Ebene. Die Anordnung 100 weist die Vorrichtung 4 zur Halterung des Elektrowerkzeugs 1 an dem Handhabungsgerät 5 auf, welche die wenigstens eine Führungsnut 3 an dem Elektrowerkzeug 1 oder an dem Handhabungsgerät 5, den wenigstens einen zum Eingriff in die Führungsnut 3 geeigneten Vorsprung 9 an dem Handhabungsgerät 5 oder an dem Elektrowerkzeug 1 und das Verriegelungselement 10 zur Verriegelung des Elektrowerkzeugs 1 an dem Handhabungsgerät 5 aufweist. Hierbei ist das Handhabungsgerät 5 als Schiebewagen mit einer Führungsstange 102 zur händischen Führung ausgebildet und weist zwei beiderseits des Gehäuses 7 des Handhabungsgeräts 5 angeordnete Räder 8 auf. Die Räder 8 sind dabei auf einer, in der in Fig. 8 dargestellten Ausführungsform virtuellen, Radachse 104, die mittels einer gestrichelten Linie dargestellt ist, angeordnet.

Ferner ist ein Anbringungspunkt des Elektrowerkzeugs 1 an dem Handhabungsgerät 5 in unmittelbarer Nähe zu der Arbeitseinrichtung 101 sowie in der Nähe der Radachse 104 derart angeordnet, dass eine Längsachse der Führungsstange 102 in einem Winkelbereich von 60° bis 90° zu der Ebene, an der das Elektrowerkzeug 1 abgestützt ist, anordenbar ist und zumindest in einem Winkel des Winkelbereichs die Radachse 104 des Elektrowerkzeuges 1 im Wesentlichen senkrecht schneidet.

Die Räder 8 sind in dem Ausführungsbeispiel auf jeweiligen, seitlich an dem Gehäuse 7 angeordneten und von diesem abstehenden Steckachsen angebracht, sodass ein Innenbereich des Handhabungsgeräts 5 nicht von einer durchgehenden Achse durchzogen wird, welche eine Anbringung des Elektrowerkzeugs 1 erschweren könnte. Die beiden Steckachsen sind jedoch entlang der gemeinsamen virtuellen Radachse 104 angeordnet.

In dem in Fig. 8 dargestellten Ausführungsbeispiel ist ferner eine Verschwenkeinrichtung 105 vorhanden, mittels welcher die Längsachse der Führungsstange 102 in einem Verschwenkbereich zu der Ebene, an der das Elektrowerkzeug 1 abgestützt ist, verschwenkbar ist.

Ferner weist die Führungsstange 102 in dem in Fig. 8 dargestellten Ausführungsbeispiel eine Verstelleinrichtung 106 zur Verstellung der Länge der Führungsstange 102 sowie ein Griffelement 107 zum sicheren Halten der Anordnung 100 auf.

## Patentansprüche

1. Anordnung (100) aus einem eine Arbeitseinrichtung (101) aufweisenden Elektrowerkzeug (1) und einem zur Abstützung und Bewegung des Elektrowerkzeugs (1) dienenden Handhabungsgerät (5) an einer Ebene, mit
- einer Vorrichtung (4) zur Halterung des Elektrowerkzeugs (1) an dem Handhabungsgerät (5), welche wenigstens eine Führungsnut (3) an dem Elektrowerkzeug (1) oder an dem Handhabungsgerät (5), wenigstens einen zum Eingriff in die Führungsnut (3) geeigneten Vorsprung (9) an dem Handhabungsgerät (5) oder an dem Elektrowerkzeug (1) und ein Verriegelungselement (10) zur Verriegelung des Elektrowerkzeugs (1) an dem Handhabungsgerät (5) aufweist, wobei
- das Handhabungsgerät (5) als Schiebewagen mit einer Führungsstange (102) zur händischen Führung ausgebildet ist und zwei beiderseits eines Gehäuses (7) des Handhabungsgeräts (5) auf einer, insbesondere virtuellen, Radachse (104) angeordnete Räder (8) aufweist, wobei
- ein Anbringungspunkt des Elektrowerkzeugs (1) an dem Handhabungsgerät (5) in unmittelbarer Nähe zu der Arbeitseinrichtung (101) sowie in der Nähe der Radachse (104) derart angeordnet ist, dass
- eine Längsachse der Führungsstange (102) in einem Winkelbereich von 60° bis 90° zu der Ebene, an der das Elektrowerkzeug (1) abgestützt ist, anordenbar ist und zumindest in einem Winkel des Winkelbereichs die Radachse (104) im senkrecht schneidet.

2. Anordnung (100) nach Anspruch 1,
**dadurch gekennzeichnet, dass** eine Verschwenkeinrichtung (105) vorgesehen ist, mittels welcher die Längsachse der Führungsstange (102) in einem Verschwenkbereich zu der Ebene, an der das Elektrowerkzeug (1) abgestützt ist, verschwenkbar ist.

3. Anordnung (100) nach Anspruch 1 oder 2,
**dadurch gekennzeichnet, dass** die wenigstens eine Führungsnut (3) an einem Gehäuseteil (2) des Elektrowerkzeugs (1) vorgesehen ist, und dass der wenigstens eine Vorsprung (9) an dem Handhabungsgerät (5) vorgesehen ist.

4. Anordnung (100) nach Anspruch 1, 2 oder 3,
**dadurch gekennzeichnet, dass** wenigstens zwei einander gegenüberliegende Führungsnuten (3) und jeweilige in die Führungsnuten (3) eingreifende Vorsprünge (9) vorgesehen sind.

5. Anordnung (100) nach Anspruch 4,
**dadurch gekennzeichnet, dass** die Führungsnuten (3) und die Vorsprünge (9) einen wenigstens annähernd rechteckigen Querschnitt aufweisen.

6. Anordnung (100) nach Anspruch 1, 2 oder 3
**dadurch gekennzeichnet, dass** genau eine Führungsnut (3) und genau ein Vorsprung (9) vorgesehen sind, wobei die Führungsnut (3) zwei Hinterschneidungen aufweist und wobei der Vorsprung (9) jeweilige in die Hinterschneidungen ragende Eingreifelemente aufweist.

7. Anordnung (100) nach einem der Ansprüche 1 bis 6,
**dadurch gekennzeichnet, dass** das Elektrowerkzeug (1) und das Handhabungsgerät (5) jeweilige Kontaktelemente (13) aufweisen.

8. Anordnung (100) nach Anspruch 7,
**dadurch gekennzeichnet, dass** die Kontaktelemente (13) des Handhabungsgeräts (5) und/oder des Elektrowerkzeugs (1) als Federelemente ausgebildet sind.

9. Anordnung (100) nach einem der Ansprüche 1 bis 8,
**gekennzeichnet durch** eine Ausnehmung (12), welche zum Eingreifen durch das Verriegelungselement (10) vorgesehen ist.

10. Anordnung (100) nach einem der Ansprüche 1 bis 9,
**gekennzeichnet durch** ein Federelement, welches das Verriegelungselement (10) in einer das Elektrowerkzeug (1) an dem Handhabungsgerät (5) verriegelnden Richtung vorspannt.

## Claims

1. Arrangement (100) comprising a power tool (1) having a working device (101) and a handling device (5) for supporting and moving the power tool (1) on a plane, comprising
- an apparatus (4) for holding the power tool (1) on the handling device (5), which has at least one guide groove (3) on the power tool (1) or on the handling device (5), at least one projection (9) on the handling device (5) or on the power tool (1) suitable for engaging in the guide groove (3) and a locking element (10) for locking the power tool (1) to the handling device (5); wherein
- the handling device (5) is designed as a sliding carriage comprising a guide rod (102) for manual guidance and has two wheels (8) arranged on both sides of a housing (7) of the handling device (5) on a wheel axle (104), in particular a virtual wheel axle, wherein
- a mounting point of the power tool (1) on the handling device (5) is arranged in the immediate vicinity of the working device (101) and in the vicinity of the wheel axle (104) in such a way that
- a longitudinal axis of the guide rod (102) can be arranged at an angle of between 60° and 90° to the plane on which the power tool (1) is supported and, at least in one angle of the angle range, intersects the wheel axis (104) perpendicularly.

2. Arrangement (100) according to claim 1,
**characterised in that** a pivoting device (105) is provided by means of which the longitudinal axis of the guide rod (102) can be pivoted in a pivoting range relative to the plane in which the power tool (1) is supported.

3. Arrangement (100) according to claim 1 or 2,
**characterised in that** the at least one guide groove (3) is provided on a housing part (2) of the power tool (1) and that the at least one projection (9) is provided on the handling device (5).

4. Arrangement (100) according to claim 1, 2 or 3,
**characterised in that** at least two guide grooves (3) facing each other and respective projections (9) engaging in the guide grooves (3) are provided.

5. Arrangement (100) according to claim 4,
**characterised in that** the guide grooves (3) and the projections (9) have an at least approximately rectangular cross-section.

6. Arrangement (100) according to claim 1, 2 or 3,
**characterised in that** exactly one guide groove (3) and exactly one projection (9) are provided, the guide groove (3) having two undercuts and the projection (9) having respective engagement elements projecting into the undercuts.

7. Arrangement (100) according to one of claims 1 to 6,
**characterised in that** the power tool (1) and the handling device (5) each have contact elements (13).

8. Arrangement (100) according to claim 7,
**characterised in that** the contact elements (13) of the handling device (5) and/or of the power tool (1) are designed as spring elements.

9. Arrangement (100) according to one of claims 1 to 8,
**characterised by** a recess (12) which is provided for engagement by the locking element (10).

10. Arrangement (100) according to one of claims 1 to 9,
**characterised by** a spring element which biases the locking element (10) in a direction locking the power tool (1) to the handling device (5).

## Revendications

1. Agencement (100) composé d'un outil électrique (1) présentant un dispositif de travail (101) et un appareil de manutention (5) servant à supporter et déplacer l'outil électrique (1) sur un plan, avec
- un moyen (4) destiné à maintenir l'outil électrique (1) sur l'appareil de manutention (5), lequel présente au moins une rainure de guidage (3) sur l'outil électrique (1) ou sur l'appareil de manutention (5), au moins une saillie (9) sur l'appareil de manutention (5) ou sur l'outil électrique (1) qui est appropriée à venir s'emboîter dans la rainure de guidage (3) et un élément de verrouillage (10) destiné à verrouiller l'outil électrique (1) sur l'appareil de manutention (5) ; dans lequel
- l'appareil de manutention (5) est conçu sous la forme d'un chariot coulissant avec une tige de guidage (102) pour le guidage manuel et présente deux roues (8) disposées des deux côtés d'un boîtier (7) de l'appareil de manutention (5) sur un axe de roues (104), en particulier virtuel, dans lequel
- un point d'application de l'outil électrique (1) sur l'appareil de manutention (5) est disposé à proximité immédiate du dispositif de travail (101) et à proximité de l'axe de roues (104) de telle sorte qu'
- un axe longitudinal de la tige de guidage (102) peut être disposé dans une plage d'angles de 60° à 90° par rapport au plan où l'outil électrique (1) est supporté et coupe perpendiculairement l'axe de roues (104) au moins selon un angle de la plage d'angles.

2. Agencement (100) selon la revendication 1, **caractérisé en ce qu'**un dispositif de pivotement (105) est prévu, à l'aide duquel l'axe longitudinal de la tige de guidage (102) peut pivoter dans une plage de pivotement par rapport au plan où l'outil électrique (1) est supporté.

3. Agencement (100) selon la revendication 1 ou 2, **caractérisé en ce que** l'au moins une rainure de guidage (3) est prévue sur une partie de boîtier (2) de l'outil électrique (1) et **en ce que** l'au moins une saillie (9) est prévue sur l'appareil de manutention (5).

4. Agencement (100) selon la revendication 1, 2 ou 3, **caractérisé en ce qu'**au moins deux rainures de guidage (3) opposées l'une à l'autre et des saillies (9) respectives s'emboîtant dans les rainures de guidage (3) sont prévues.

5. Agencement (100) selon la revendication 4, **caractérisé en ce que** les rainures de guidage (3) et les saillies (9) présentent une section transversale au moins approximativement rectangulaire.

6. Agencement (100) selon la revendication 1, 2 ou 3 **caractérisé en ce qu'**exactement une rainure de guidage (3) et exactement une saillie (9) sont prévues, dans lequel la rainure de guidage (3) présente deux contre-dépouilles et dans lequel la saillie (9) présente des éléments d'emboîtement respectifs faisant saillie dans les contre-dépouilles.

7. Agencement (100) selon une des revendications 1 à 6, **caractérisé en ce que** l'outil électrique (1) et l'appareil de manutention (5) présentent des éléments de contact respectifs (13).

8. Agencement (100) selon la revendication 7, **caractérisé en ce que** les éléments de contact (13) de l'appareil de manutention (5) et/ou de l'outil électrique (1) sont conçus sous la forme d'éléments de ressort.

9. Agencement (100) selon une des revendications 1 à 8, **caractérisé par** un évidement (12) qui est prévu pour l'emboîtement par l'élément de verrouillage (10).

10. Agencement (100) selon une des revendications 1 à 9, **caractérisé par** un élément de ressort qui précontraint l'élément de verrouillage (10) dans une direction verrouillant l'outil électrique (1) sur l'appareil de manutention (5).
